# EUROPEAN PATENT APPLICATION

(11) **EP 0 867 844 A2**
(43) Date of publication of application: **30.09.1998**
(21) Application number: 98105343.2
(22) Date of filing: 24.03.1998
(51) Int. Cl.: G08B 3/10, H04M 1/72

(54) **A communication device with different call announcements according to the caller's identity**

(30) Priority: 26.03.1997 JP 74147/97
(71) Applicant: NEC CORPORATION, Tokyo (JP)
(72) Inventor: Muramatsu, Toshihiko, Kakegawa-shi, Shizuoka (JP)
(74) Representative: Baronetzky, Klaus, Dipl.-Ing.

(57) **Abstract**

With the present communication device, when a radio section 2 receives a radio signal containing a selective call number corresponding with one of selective call numbers registered in the device, a control section 12 stores a message signal subsequent to the selective call number into RAM 5. Then, a message code conversion section 8 converts each of character/symbol codes constituting the message signal into a legible letter for display, or into a message. In association, a searching section 7 checks whether or not the message contains a caller's name correspondent with name data previously stored in RAM 6. When the message is found to contain a caller's name correspondent with one of the name data stored in RAM 6, a control section 12 retrieves a sound pattern registered in connection with that caller's name, and instructs a notification section 11 to notify the user of a call by delivering the sound pattern, and at the same time a display section 10 to display the message as well as the caller's name.

## Description

### BACKGROUND OF THE INVENTION

### Field of the Invention

This invention relates to a communication device capable of notifing a user of a call.

### Description of the Related Art

Conventionally, with a communication device of this type, for example, with a radio selective call receiver, arrival of a call is alerted when a call reaches the receiver. The user of the receiver, if he is by accident present at a meeting and wants to avoid the alert, can modify the mode of receiver such that the receiver may not generate a sound even when it receives a call. However, if he puts the receiver into a bag setting the receiver to a soundless mode, he may not notice the call even if the receiver receives the call. Then, no matter how urgently the caller may want to contact with the user, the caller could not catch up with the user.

As a solution to this problem a selective call system whereby the caller can forcibly put the receiver of the user to a sound mode has been proposed, and such system is disclosed, for example, in Japanese laid-open patent publication heisei 3-44118.

With this selective call system, when the receiver receives a message signal, it checks whether a specific code is present or not at the head of the massage signal following ID code. When it does not find any specific code there, it checks next whether the receiver's current call mode is sounding or soundless. When it finds that the call mode is set to sounding, it informs the user of a call by generating a sound and lighting an LED. When it finds that the call mode is set to soundless, it informsthe user of a call only by lighting an LED. On the other hand, when the specific code is not detected at the head of the message signal, it informs the user of the call by generating a sound as well as by lighting an LED regardless of the current call mode the receiver is set to This specific code is entered by the caller when the caller sends a message to the user. Accordingly, with this selective call system, the caller adds a specific code to a message signal, and, by so doing, the caller forcibly puts the receiver of the user to a sound mode, even if the user himself has set his receiver to a soundless mode and put it into his bag. Hence, the user never fails to notice the call from the caller.

However, with this selective call system, the caller must enter the specific code when the message is emergency.

Alternatively, a selective call receiver has been proposed which has a plurality of selective call numbers, and gives a different sound according to the selective number by which it receives a call.

Such a selective call receiver is disclosed, for example, in Japanese laid-open patent application showa 63-252029.

With this type of the selective call receiver, the user assigns in advance different sounds to a plurality of call numbers and registers them to the receiver to memorize. When the receiver receives a message signal from a caller, the receiver checks whether or not the call number it has just received coincides with one of the registered numbers. When the call number is detected to coincide with one of the registered numbers, it informs the user of a call based on the sound pattern corresponding to that number. Accordingly, with this type of individual selective call receiver, the user can recognize from the sound pattern itself from which source the call is made, for example, he can recognize whether the call is for an information service or for his private.

However, with this selective call receiver, although it is possible for the user to predict from the sound pattern the kind of information he is going to receive, it is impossible for him to identify the caller from the sound itself.

This problem could be solved if different call numbers were assigned to individual callers. However, to achieve this, it is necessary for the receiver to have a plurality of call numbers. In the currently available radio selective call receiver, principally one communication line is assigned to one call number. Thus, if individual receivers were allowed to have a plurality of call numbers each, communication lines available in the transmission device for general communication would be reduced.

### SUMMARY OF THE INVENTION

This invention is proposed as a remedy to above problem, and its object is to provide a communication device which enables the user to recognize who is calling now, without reducing communication lines available to the transmission device.

Another object of this invention is to provide a communication device which enables the user to recognize who has made a call even if the user forgets the connection of the caller with his/her call mode and can not identify the caller.

To attain above objects, the communication device of this invention is provided with a radio section which receives signals carrying data indicating the name of caller, and an announcement section which announces a call by delivering a different signal pattern according to the data. It may have preferably a display for the data. Alternatively, the announcement section may be set not to make a sounding call according to the data. The announcement section preferably includes at least one of a speaker, vibrator and LED. The communication device is preferably a radio selective call receiver.

Further, the communication device of this invention includes a radio section to receive radio signals, a memory section to memorize data indicating callers' names and call patterns corresponding to the data in advance, a searching section to search whether or not a received signal contains the same data with those stored in memory, and an announcement section which, if it is confirmed that the received signal contains the same data with the stored data, announces a call by delivering a signal pattern corresponding to the data. In addition, the device preferably has a registration section which register the data and their call patterns in combination. The data and call patterns stored in the memory section can be altered. Checking in the searching section preferably takes place by comparing each characters/symbols of message in the received radio signal with each of characters/symbols of data, from the head of message one after another in order. The memory section preferably stores data in order of the number of characters/symbols contained in the data.

Furthermore, the communication device of this invention consists of a radio section to receive radio signals, a control section to check whether or not a selective call number contained in a radio signal corresponds with one of previously registered selective call numbers, a storing section to store the message contained in the signal when the selective call number contained in the radio signal is found to correspond with one of the previously registered call numbers, a memory section to memorize data indicating callers' names and call patterns corresponding to the data, a searching section to search whether or not the received signal contains the same data with that memorized data, and an announcement section which, if it is confirmed that the received signal contains the same data with the stored data, announces a call by delivering a call signal pattern corresponding with the data, and a display section to display at least one of the message and data. The display section preferably displays data in a predetermined area.

As is obvious from above, with this invention, the receiver searches the caller's name based on the signal delivered by the caller, and announces a call by delivering a call signal pattern corresponding to the caller's name, and hence the user of the receiver never fails to recognize who is now calling.

In addition, as the name of caller is also indicated on the display section, the user of the receiver never fails to recognize who is calling only by checking the caller's name on the display, even if he forgets which call pattern represents which caller.

### BRIEF DESCRIPTION OF THE DRAWINGS

These and other objects, features and advantages of the invention will become more fully apparent from the following detailed description given in conjunction with accompanying drawings.

Fig. 1 is a diagram illustrating the constitution of one preferred example of a radio selective call receiver of this invention.

Fig. 2 illustrates one preferred example of a message code conversion table which is stored in the message code conversion section 8 as depicted in Fig. 1.

Fig. 3 is a flowchart illustrating the operation of one preferred example of the radio selective call receiver as depicted in Fig. 1.

Fig. 4 illustrates one preferred example of a storing table to store callers and sound patterns chosen in connection with callers which is stored in RAM 6 of Fig. 1.

Fig. 5 illustrates the wave patterns of call sounds contained in the preferred example of Fig. 4.

Fig. 6 (a)-(f), as a preferred example, illustrate how a caller and his/her corresponding sound pattern for call announcement can be set.

Figs. 7(a) and 7(b), as a preferred example, illustrate lists of predetermined menu, and of sound patterns for call announcement.

Figs. 8 and 9 are flowcharts to illustrate the operation of a preferred example of searching section 7 as depicted in Fig. 1.

Fig. 10(a)-(e) are diagrams to illustrate the operation of a preferred example of searching section 7 as depicted in Figs. 8 and 9.

Fig. 11 shows a preferred example to illustrate how a caller's name and his/her message are given on the display section 10 as depicted in Fig. 1.

### DETAILED DESCRIPTION OF THE INVENTION

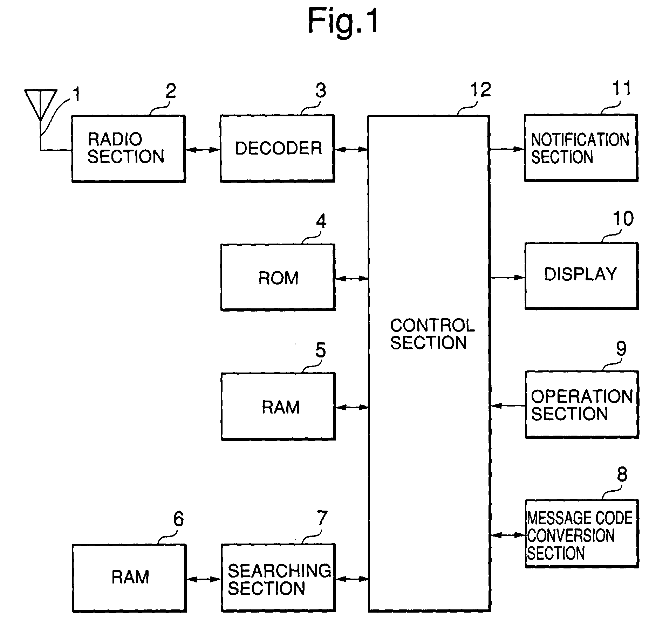

The communication device of this invention, more preferably a radio selective call receiver will be described by means of Fig. 1 with an attention paid to its constitution.

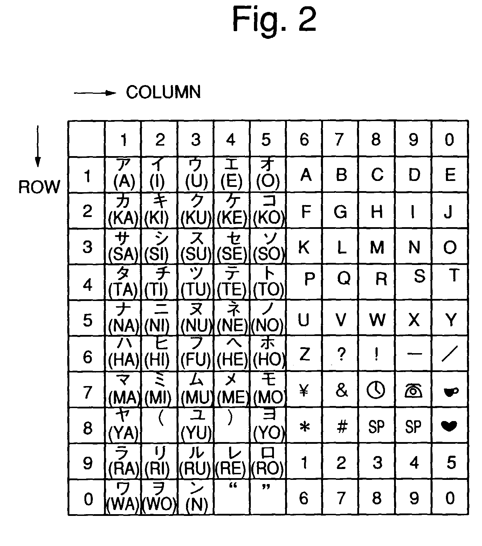

In Fig. 1, a radio section 2 receives a radio signal prepared in accordance with, for example, POCSAG mode dispatched from a base station not illustrated here through an antenna 1, amplifies/demodulates the received signal and converts the demodulated signal into a digital signal after having rectified it. A decoder 3 compares a selective call number contained in the received signal with the selective call number data previously registered in ROM4 of the same receiver. When the received selection call number has a predetermined relationship with the stored data, a control section 12 stores temporarily the message data contained in the received signal into RAM 5. A message code converting section 8, in response to a control signal from the control section 12, converts individual character codes constituting the received signal into corresponding characters/symbols for display according to, for example, the message code conversion table as depicted in Fig. 2. A display section 10, when instructed by the control section 12, displays the received message, time, and so on. The display section preferably consist of either a CRT or LCD. A notification section 8, when instructed by the control section 12, notify a user of a call. The notification section 8 preferably consist of at least one chosen from a speaker, LED and vibrator. The present example will be described below assuming that the notification section 8 consists of a speaker which announces a call by generating a sound. An operation section 9 is used for setting the mode of various functions, such as reading-out of message, the manner how to announce a call, etc.

Further, with this invention, RAM 6 stores the name data of caller and sound patterns assigned to those caller with the two kinds of data combined in a corresponding manner. A searching section 7 checks whether or not the received message contains a name which is the same with a caller's name datum stored in RAM 6. The control section 12, after confirming the message contains the same caller's name, instructs the display section 10 to display the caller's name together with the message. The display section preferably separates the received message into the very message excluding the caller's name, and the caller's name, and displays them separately.

In this invention with such constitution as described above, when the communication device receives message data, the searching section 7 checks whether or not the received message contains a name which is the same with a caller's name datum stored in RAM 6. When it is confirmed that the message contains the same caller's name datum, a sound pattern registered in connection with the caller's name is outputted from the notification section 8. When the notification is executed, the received message and caller's name are displayed separately on the display section 10. On the other hand, when it is confirmed that the message does not contain any names that corresponds with caller's name datum stored in RAM 6, a nonspecific sound pattern previously registered for such occasion is outputted from the notification section 8.

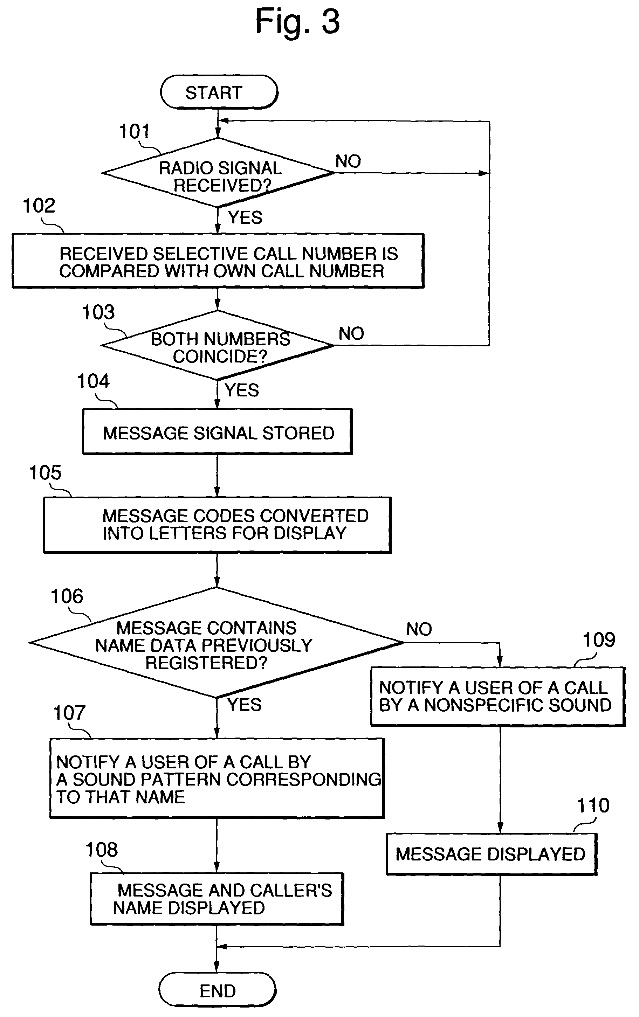

Next, operation of the radio selective call receiver shown in Fig. 1 will be described in detail below by means of Fig. 3.

In Fig. 3, it is checked whether or not the receiver receives a radio signal (S101). When it is confirmed that the receiver receives a radio signal (YES at S101), a selective call number contained in the digital signal fed to the decoder 3 is compared with the selective call number data previously stored in ROM4 (S102). When a corresponding counterpart to the former is not detected in the latter (NO at S103), a stand-by state is resumed. On the other hand, when the selective call number in the received signal finds a counterpart in the selective call number data (YES at S103), the message data subsequent to the received selective number are fed from the decoder 3 to the control section 12. The control section 12 stores the message data into RAM 5 (S104). The message code conversion section 8 converts, as will be detailed later, individual character codes of received message data into characters/symbols for display, that is, message, using the message code conversion table shown in Fig. 2 (S105). The converted message are stored in a register not illustrated here. The searching section 7 searches whether or not the message stored in the register not illustrated here contains a name which is the same with a caller's name datum stored in RAM 6 (S106). When it finds that the message contains the same caller's name stored in RAM 6 (YES at S106), the control section 12 detecte a sound pattern registered in connection with the same name data, and instructs the notification section 11 to notify a user of a call by giving that sound pattern (S107), and concurrently displays the caller's name and his/her message separately on the display section 10 (S108). On the other hand, when the searching section 7 finds that the message does not contain any name that corresponds with a name datum stored in RAM 6 (NO at S106), the control section 12 supplies a nonspecific sound pattern datum which has been previously registered by the user through the operation section 11 (S109) for such occasion, and instructs the notification section 11 to generate the nonspecific sound pattern, and concurrently displays the message on the display section 10 (S110). How the searching section 7 determines whether or not the received message contains a name which is the same with a caller's name datum stored in RAM 6 will be detailed later.

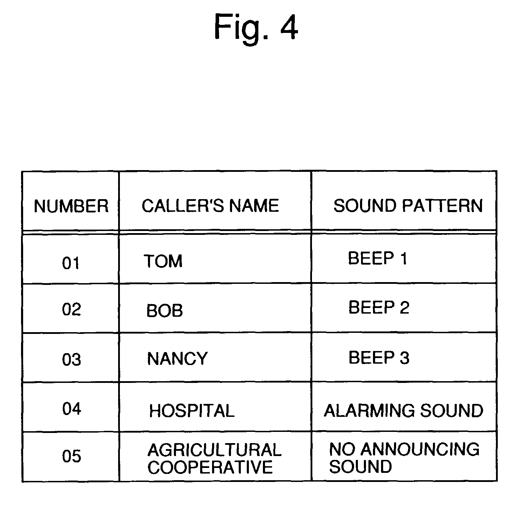

Fig. 4 illustrates a preferred example of data table stored in RAM 6 of Fig. 1 showing the relation between caller's names and their registered sound patterns.

Fig. 4 indicates that five name data connected with characteristic sound patterns have been registered. Namely, the received message includes the name "TOM", his call is alerted by a sound pattern of "Beep 1," while when "BOB" is included , his call is alerted by a sound pattern of "Beep 2."

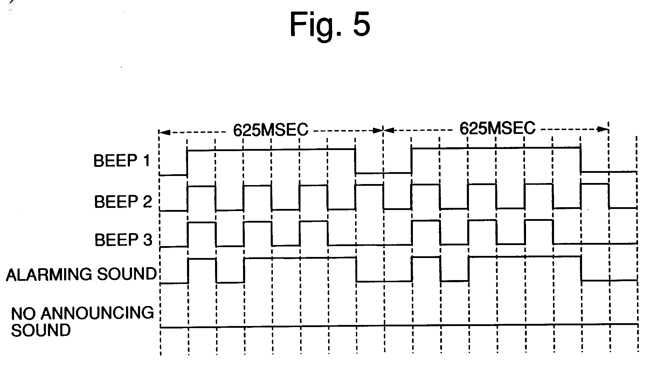

Fig. 5 shows a preferred example of sound waves constituting the sound patterns depicted in Fig. 4. In Fig. 5, each sound has a cycle of, for example, 625msec, and a frequency of, for example, 2740Hz.

Returned to Fig. 4, the registered name data may not be always the same with the caller's real name. For example, the user may consult in advance with the caller to determine a symbol to indicate the identity of caller, and register the symbol instead of the caller's name. As long as the user can identify the caller from the symbol, the symbol can take any form. The number of caller's name data stored in RAM 6 is not limited to five. The callers' name data and corresponding sound patterns may be added, modified or deleted through operation of the operation section 9.

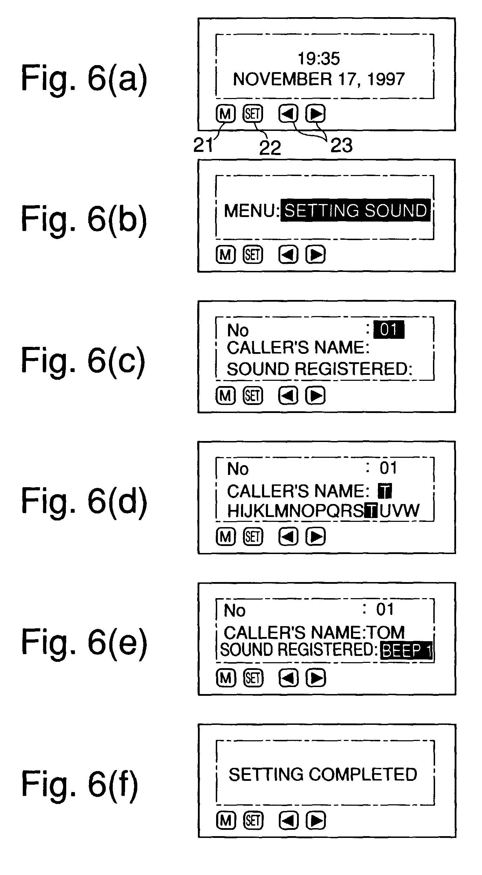

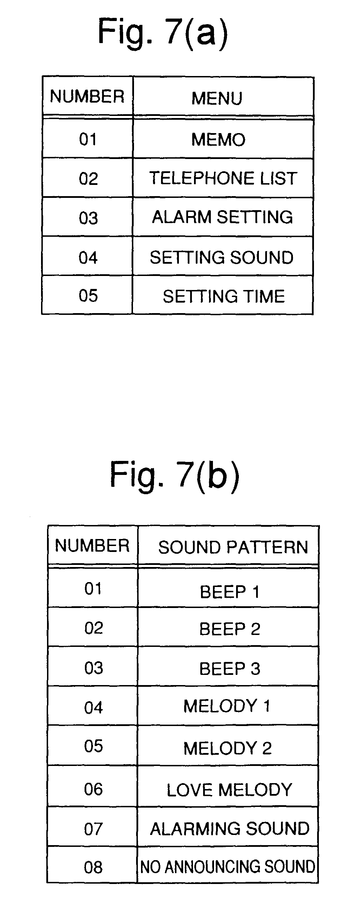

A preferred example of registration of callers' name data and corresponding sound patterns will be described by means of Figs. 6(a) to 6(f) and Figs. 7(a) and 7(b).

Figs. 6(a) to 6(f) give a flat view of the operation and display sections 9 and 10 of a radio selective call receiver of this invention.

In Fig. 6(a), when the receiver is in a stand-by state, the display section 10 gives an indication of date and time. While the receiver is in a stand-by state, the user presses a button 21 marked as "M," and then he gets a menu on display as shown in Fig. 6(b). In Fig. 6(b), each time the user presses a scroll button 23 ("<" or ">" button), options as indicated in Fig. 7(a) are displayed in order.

When an option "setting a sound pattern" is displayed, the user presses a "SET" button 22, and then gets a display as indicated in Figs 6(c) to 6(e) through which he can set a sound pattern.

In Fig. 6(c), the user should register a storage number for storage. In Fig. 6(c), each time the user presses the scroll button 23 ("<" or ">" button), he gets on display a storage number starting from "01" to a maximum storage number, for example, "05" in order. If the user presses "SET" button 22 when the storage number "01" is on display, the storage number "01" is registered, and then gets a display as indicated in Fig. 6(d) through which he can register the caller's name. In Fig. 6(d), each time the user presses the scroll button 23 ("<" or ">" button), characters or symbols as shown in Fig. 2 are displayed in a predetermined order on the bottom of display. The user chooses a desired character/symbol by pressing the scroll buttons 23, presses the "SET" button 22 to registers it and repeats the same operation until he has registered the whole characters/symbols constituting a string that represents the caller to be registered. Through this procedure, he can register, for example, "TOM." In Fig. 6(d), the user of the receiver puts a cursor on "T", and presses the "SET" button 22. On completion of the registration of caller's name, the user presses the "M" button 21, and gets an display as indicated in Fig. 6(e) through which he can register a sound pattern. In Fig. 6(e), each time the user presses the scroll button 23 ("<" or ">" button), sound patterns as indicated in Fig. 7(b) are displayed one after another in order. When the sound pattern "Beep 1" is on display, the user presses the "SET" key to register it. Thus, he has completed registration of a caller's name and corresponding sound pattern, and gets a display as indicated in Fig. 6(f) through which he is informed of the registration being completed.

In Fig. 6(f), a display is given which indicates the registration of a sound pattern is completed, for example, "Registration completed." Then after a predetermined time, for example, two seconds, the receiver automatically returns to a stand-by state as indicated in Fig. 6(a).

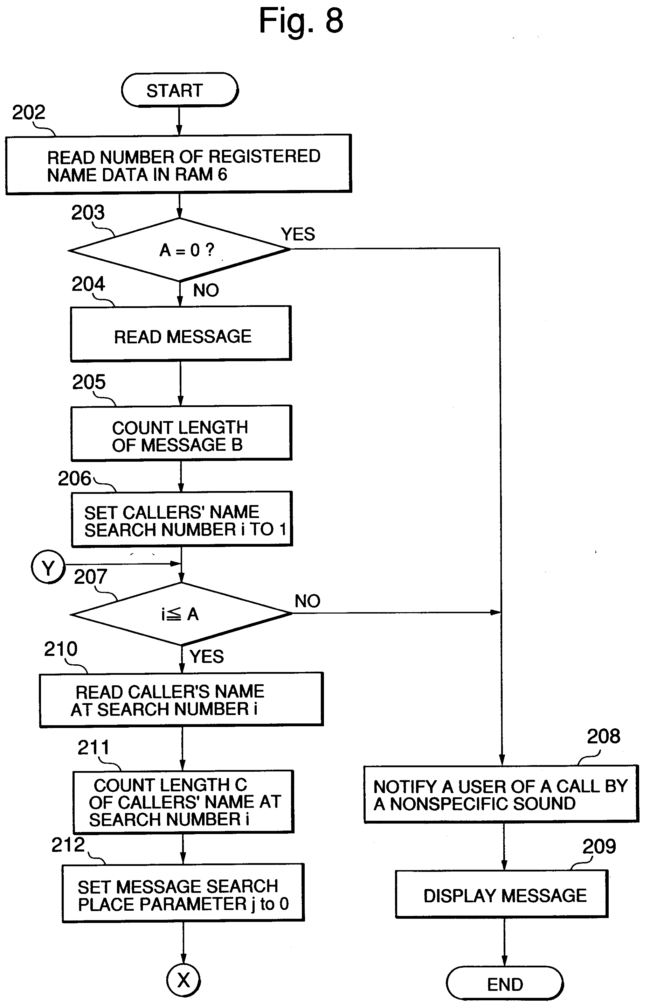

A preferred example of operation of the searching section 7 of Fig. 1 will be described in detail below by means of Figs. 8 to 10, or the processes subsequent to S106 illustrated in Fig. 3 will be detailed.

In Fig. 8, the number A of callers' names registered in RAM 6 is read out, for example, with the receiver of this invention, the number "5" is read out (S202). Then, the control section 12 checks whether or not the number A is zero (S203). When it finds the number A is zero (YES at S203), the control section 12 instructs the notification section 9 to inform the user of a call by giving a nonspecific sound pattern which has been previously registered by the user through operation of the operation section 9 (S208) for such occasion.

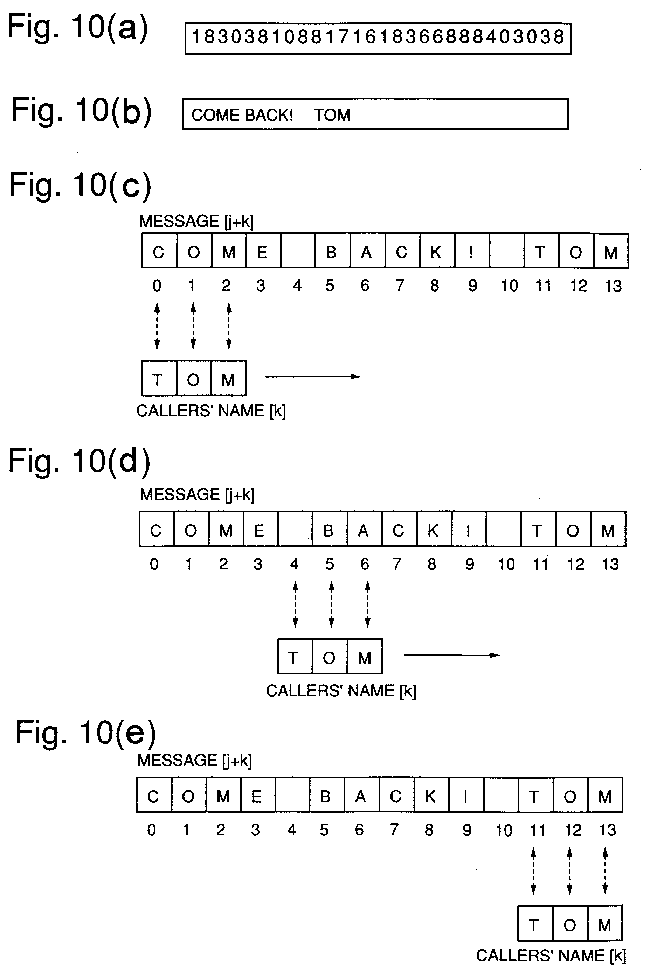

When the control section 12 finds the number A is not zero (NO at S203), it reads a message as indicated in Fig. 10(b) after converting the received message codes into legible letters (S204), and counts the length B of message, for example, "14" in this example (S205). Then, a caller's name search number i or the number indicated in Fig. 4 is set to "1" (S206), and it is checked whether or not the search number i is equal to or smaller than the number A of registered names (S207).

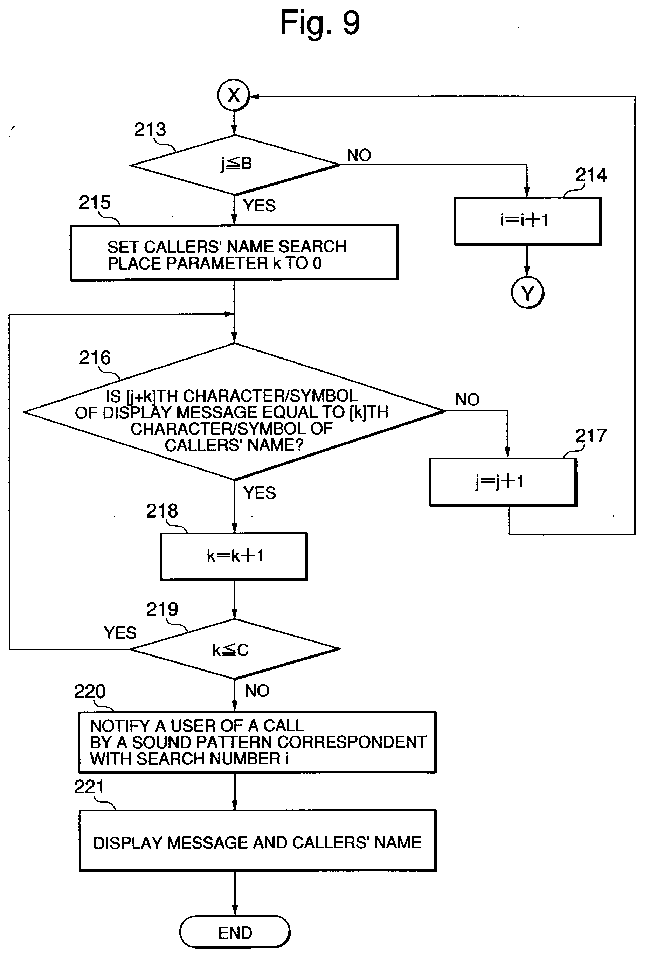

When the search number i is equal to or smaller than the number A of registered names (YES at S207), the caller's name corresponding to the search number i, or the registered number "1", that is, "TOM" in this example, is read out (S210), and the length C of the caller's name is counted, that is "3" in this example (S211). Then, a message search place parameter j in the message to indicate the message search place is set to "0" (S212), and it is checked whether or not the message search place parameter j is equal to or smaller than the message length B (S213 in Fig. 9).

When the message search place parameter j is equal to or smaller than the message length B (YES at S213), a caller's name search place parameter k indicating the search place in the caller's name is set to "0" (S215) . Then, as indicated in Fig. 10(c), it is checked whether or not the character/symbol present in the message at [j+k]th place corresponds with the character/symbol present in the caller's name at [k]th place (S216)

When the character/symbol in the display message at [j +k]th place does not correspond with the character/symbol in the caller's name at [k]th place (NO at S216), "1" is added to the message search place parameter j (S217), and the same operation as in S213 is repeated. Namely, as shown in Fig. 10(d), search place is shifted one space after another on the display message until the head character "T" of caller's name is found on the message.

Later, when the character/symbol in the display message at [j+k]th place is found to correspond with the character/symbol of caller's name at [k]th place (YES at S216), "1" is added to the caller's name search place parameter k (S218), it is checked whether or not the caller's name search place parameter k is equal to or smaller than the length C of caller's name. When the caller's name search place parameter k is found to be equal to or smaller than the length C of caller's name (YES at S219), operation taken at S216 is repeated. Namely, for each character/symbol of caller's name, search is made by shifting the search place one after another rightward on the display message until the same search operation is completed for all the characters/symbols of the caller's name.

Later, when the caller's name search place parameter k is found to be larger than the length C of caller's name (NO at S219), it indicates, as shown in Fig. 10(e), that the caller's name is found on the display message. Thus, a sound pattern corresponding to the caller's name search number i as shown in Fig. 4 is given as a notification of the call (S220). At the same time when the notification of call is made, the message and caller's name are indicated on the display section 10 (S221).

In operation taken at S213, when the message search place parameter j is larger than the message length B, "1" is added to the caller's name search number i (S214), and it is checked whether or not the search number i is equal to or smaller than the number A of registered names (S207). When the search number i is found to be larger than the registered number A (NO at S207), a nonspecific sound pattern which has been registered by the user of the receiver for such occasion is given as a notification of the call (S208), and concurrently the message is displayed on the display section 10 (S209).

In Figs. 8 and 9, search of whether or not the message contains a caller's name datum stored in RAM 6 is made from the head of display message, but the search may be made from the tail of message. Further, in Figs. 8 and 9, search is made from the "1" st caller's name of the name data stored in RAM 6, for example, from "TOM" in this example, but the order of search should not be limited to any specific order.

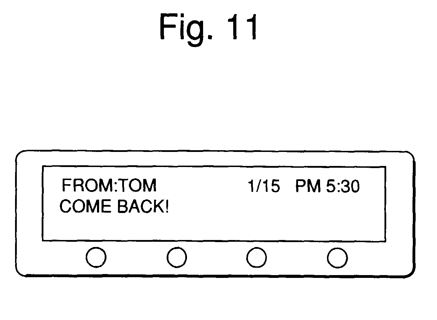

Fig. 11 gives a preferred example of a display section 10 which will serve for displaying the message and caller's name as obtained at S221 of Fig. 9.

In Fig. 11, when the received message contains the caller's name, the caller's name is separated from the message. The caller's name is displayed behind "FROM:" which has been previously programmed. This word "FROM:" is automatically put to display whenever the received message contains the caller's name. Accordingly, the user can recognize who the caller is not only from the calling sound but also from the caller's name indicated behind "FROM:" displayed on the display section 10. The style and display position of the word "FROM:" is not limited to any specific kind and rule as long as it is separately displayed from the message. Further, normally the message and caller's name on display will disappear in a certain definite time, but the receiver may be so programmed as to keep the same display until the user manipulates the operation section 9 for a renewed operation. In this case, even if the user does not notice the notification of call from a caller through a sound, and leaves the receiver untouched for a certain definite time, he can recognize later, by only looking at the display section 10, the caller's name and message he has left.

In the examples described above, for the user to recognize who is calling when he receives a call, a different sound pattern is generated according to the caller. However, the means to announce a call is not limited to sounds. They can be made instead with vibration patterns, or blinking patterns of LEDs.

Further, in the examples described above, when the caller's name is searched after the message data have been compared one by one with the callers' name data stored, the name which was first found to correspond with one of the name data is given priority. Thus a sound pattern is determined according to the thus first found caller's name. Let's assume a case where two names different in length, of which the shorter one is the same with the front part of the longer one are concurrently stored in RAM 6 as name data. Or, let's assume that, for example, "TOM" and "TOMMY" are concurrently included in the name data of RAM 6, and the caller is "TOMMY." The receiver, even though the caller is "TOMMY," may find "TOM" first, and gives a sound pattern registered under the name of "TOM." As a solution to this problem, in this invention, search is preferably made in a descending order of the length of caller's name. Namely, when callers' name data are registered in RAM6, the callers' name data are preferably arranged in order of length and stored so as to keep the order.

Furthermore, in the examples described above, at the time a name that corresponds with one of the name data stored in RAM6 is found, a sound pattern corresponding to that name is picked up and delivered as a notification of call. However, there is a case where one message contains a plurality of names, for example, such as a message, "MARY IS CALLING YOU. TOM." In such case, to find a proper caller it may be necessary for the receiver to search all name data stored in RAM 6. To avoid such inconvenience, the receiver is so programmed as to choose a name at the end of message as the caller, because usually the caller puts his/her name at the end of message, and to inform the user of the call by giving a sound pattern corresponding to the thus chosen caller. Search of the caller's name may take place from the head or tail of message.

Still further, the examples described above relate to radio selective call receivers, but the communication device of this invention may include a portable telephone, particularly a portable handyphone device (PHS) whereby a short mail sent from a caller can be displayed. For a PHS to display a short mail, the caller, using the character/code conversion table shown in Fig. 2, prepares a short mail and transmits it. Accordingly, in the same manner as above examples, the caller attaches his/her name at the end of short mail and sends it together with the mail body. The receiver checks whether or not the caller's name included in the short mail corresponds with one of the name data stored in memory. When it finds that the caller's name corresponds with one of the name data, it informs the user of the call from the caller by giving a notification signal corresponding to the caller. The name which the caller attaches at the end of short mail body when sending the short mail may consist of a symbol or a code representing the caller. Any symbols or characters may be used as long as the user of the receiver can recognize who is calling through them and the caller can use them as an identification of himself/herself.

As describe above, according to this invention, as long as the caller attaches his/her name at the end of message and transmits it, the receiver searches a corresponding name, finds it, and informs the user of a call by delivering a call pattern registered under the found name. Accordingly, the user never fails to recognize who is calling.

Further, according to this invention, the receiver not only delivers a different call pattern according to the found caller's name, but also displays the found caller's name on display. Accordingly, even if the user of the receiver forgets the connection between caller's name and call pattern, and can not tell who is calling from the call pattern, he can recognize without fail who is calling, by only looking at the display section.

Obviously, numerous additions modifications and variations of the present invention are possible in light of the above teachings. It is, therefore, to be understood that within the scope of the appended claims, the invention may be practiced otherwise than was specifically described herein.

## Claims

1. A communication device comprising:
a radio section to receive a call number and a subsequent message signal; and
a notification section to notify the user of a call by delivering a different signal pattern according to data indicative of a caller's name and contained in the message signal.

2. The communication device as claimed in claim 1, further comprising:
a display section to display said data indicative of a caller's name.

3. A communication device as claimed in claim 2, wherein said display section displays said data indicative of a caller's name in a predetermined area.

4. A communication device as claimed in claim 2, wherein said display section displays separately said data indicative of a caller's name and the message contained in message signal.

5. The communication device as claimed in claim 1, further comprising:
a setting section to set said notification section to have no notification the user of a call according to said data of caller's name.

6. The communication device as claimed in claim 1, further comprising a control section to pick up said data indicative of a caller's name in said message signal.

7. The communication device as claimed in claim 6, further comprising:
a control section to check whether or not said call number corresponds with a call number previously registered; and
a storing section which, when said call number is found to correspond with a call number previously registered, stores the message contained in said message signal.

8. The communication device as claimed in claim 1, further comprising:
a memory section to memorize said data and the call signal pattern corresponding to said data; and
a searching section to check whether or not said message signal contains said data indicative of caller's name stored in said memory section.

9. A communication device as claimed in claim 8, wherein said notification section, when said message signal is found to contain said data indicative of caller's name stored in said memory section, notify the user of a call by delivering a call signal pattern corresponding to said data of caller's name.

10. A communication device as claimed in claim 9, wherein said notification section includes at least one selected from a speaker, vibrator and LED.

11. The communication device as claimed in claim 8, further comprising:
a storing section which arranges said data of caller's name and said call signal pattern in a corresponding manner, and stores them in combination.

12. A communication device as claimed in claim 11, wherein said data of caller's name and said call signal pattern stored in the storing section can be altered.

13. A communication device as claimed in claim 8, wherein said searching section further comprises a comparing section to compare each of character/symbols of message contained in said message signal with each character/symbol of said data of caller's name, from the head of said message one after another in order.

14. A communication device as claimed in claim 13, wherein said memory section serves as a means by which to store said data of caller's name in order of the number of character/symbols contained in said data.

15. A communication device as claimed in claim 1, which comprises a radio selective call receiver.

16. A communication device as claimed in claim 1, which comprises a portable telephone.

17. A method whereby a communication device notifies the arrival of a call comprising the steps of:
receiving a call number and a subsequent message signal; and
notifying the user of a call by delivering a different signal pattern according to data indicative of a caller's name contained in said message signal.

18. The method as claimed in claim 17 whereby a communication device notifies the arrival of a call, further comprising the step of:
picking up said data indicative of a caller's name from said message signal.

19. The method as claimed in claim 17 whereby a communication device notifies the user of the arrival of a call, further comprising the step of:
displaying said data of a caller's name.

20. A method as claimed in claim 19 whereby a communication device notifies the user of the arrival of a call, wherein said displaying comprises the step of: displaying separately said data indicative of caller's name and a message contained in the message signal.

21. The method as claimed in claim 17 whereby a communication device notifies the user of the arrival of a call, further comprising the step of:
memorizing said data of caller's name and a call signal pattern corresponding to said data of caller's name;
checking whether or not said call number corresponds with a call number previously registered;
storing message codes contained in the message signal; converting the message codes into a message for display; and
checking whether or not said display message contains the same data with those indicative of caller's name.

22. A method as claimed in claim 21 whereby a communication device notifies the user of the arrival of a call, wherein said checking that display message contains said data comprises the step of:
comparing each of characters/symbols of said data with each of characters/symbols of said display message one after another in order for correspondence.
